# FASCICULE DE BREVET EUROPEEN

(11) **EP 3 645 988 B1**
(45) Date de publication et mention de la délivrance du brevet: **01.09.2021**
(21) Numéro de dépôt: 18752535.7
(22) Date de dépôt: 27.06.2018
(51) Int. Cl.: G01K 5/02, G01K 5/08

(54) **THERMOMÈTRE À DILATATION DE LIQUIDE ET SON PROCÉDÉ DE FABRICATION**
DEHNUNGSFLÜSSIGKEITSTHERMOMETER UND HERSTELLUNGSVERFAHREN DAFÜR
EXPANDING-LIQUID THERMOMETER, AND METHOD FOR MANUFACTURING SAME

(30) Priorité: 27.06.2017 FR 1755874
(43) Date de publication de la demande: 06.05.2020
(73) Titulaire: Alla France, 49120 Chemille-En-Anjou (FR)
(72) Inventeur: ALLA, Jean-Marc, 49750 Chanzeaux (FR)
(74) Mandataire: Jacobacci Coralis Harle
(86) Numéro de dépôt international: PCT/FR2018/051575
(87) Numéro de publication internationale: WO 2019/002767

(56) Documents cités:
- GB-A- 2 489 747
- US-A- 3 636 770

## Description

### DOMAINE TECHNIQUE AUQUEL SE RAPPORTE L'INVENTION

La présente invention concerne de manière générale le domaine des instruments de mesure de la température.

Elle concerne plus particulièrement un thermomètre du type à dilatation de liquide, ainsi qu'un procédé de fabrication d'un tel thermomètre.

### ARRIERE-PLAN TECHNOLOGIQUE

On connaît un procédé de fabrication d'un thermomètre à dilatation de liquide qui consiste à former une ébauche à partir d'un tube en matière transparente (en particulier du verre), comprenant une partie de corps prolongée par un plongeant (partie de tube de diamètre plus réduit), ladite ébauche étant ouverte au niveau de ses deux extrémités.

En parallèle, partant d'un tube capillaire ouvert à ses deux extrémités, on façonne une collerette circulaire à l'une desdites extrémités ouvertes, dont le diamètre externe correspond, au jeu près, au diamètre interne du plongeant.

On introduit l'extrémité du capillaire munie de la collerette dans l'ébauche, jusqu'à un niveau situé légèrement au dessus de l'extrémité libre du plongeant ; et on solidarise la bordure externe de la collerette avec la paroi intérieure du plongeant.

On ferme alors l'extrémité libre du plongeant pour former un réservoir communiquant avec l'âme du capillaire.

Le réservoir et une partie du capillaire sont ensuite remplis d'un liquide thermiquement expansible (appelé liquide thermométrique) par l'extrémité du capillaire qui reste ouverte. Cette extrémité ouverte de capillaire est fermée ; et une étiquette munie d'une échelle de mesure est solidarisée par collage avec le capillaire, dans l'âme du corps d'ébauche.

Enfin, on ferme l'extrémité du corps d'ébauche qui restait ouverte.

Un tel procédé nécessite cependant un nombre important d'opérations manuelles relativement longues et délicates qui augmentent les coûts de production du thermomètre.

Le document US 3 636 770 A décrit un thermomètre avec un réservoir de liquide thermométrique, prolongé par un capillaire, l'ensemble étant intégré dans une enveloppe tubulaire transparente munie d'un bouchon supérieur. Le tube capillaire est associé à une carte munie d'une échelle graduée.En partie inférieur, le réservoir de liquide thermométrique vient en appui contre l'extrémité inférieure de l'enveloppe tubulaire transparente. En partie supérieure, l'extrémité du tube capillaire est maintenue en place par une couronne de matière plastique et par un ou plusieurs blocs de matière élastique placés entre la couronne et le bouchon.

Le document GB 2 489 747 A décrit un thermomètre pour réfrigérateur, dont le tube capillaire avec réservoir de liquide thermométrique est placé à l'intérieur d'une enveloppe tubulaire réalisée en matériau polymère transparent. Le tube capillaire est associé à une carte munie d'une échelle graduée. Les deux extrémités de l'enveloppe tubulaire des chapeaux d'obturation de forme générale hexagonale pour permettre un positionnement stable horizontal du thermomètre sur une surface plane. Le réservoir de liquide thermométrique est encastré dans un bloc de pâte/cire simulant de la nourriture, par exemple une cire de fromage.

### OBJET DE L'INVENTION

Afin de remédier aux inconvénients précités de l'état de la technique, la présente invention propose un thermomètre à dilatation de liquide comprenant :
a/ un réservoir de liquide thermométrique,
b/ un tube capillaire en communication fluidique avec ledit réservoir de liquide, comprenant une première extrémité et une seconde extrémité
c/ une enveloppe tubulaire en matériau transparent comprenant
   - une surface extérieure,
   - une surface intérieure délimitant un volume intérieur,
   - une première extrémité d'enveloppe,
   - une seconde extrémité d'enveloppe qui comporte une paroi de fermeture obturant ledit volume intérieur, et qui comporte une surface intérieure formée d'une partie de ladite surface intérieure de ladite enveloppe tubulaire,
      au niveau de laquelle seconde extrémité d'enveloppe est ménagé ledit réservoir de liquide,
      et dans le volume intérieur de laquelle enveloppe tubulaire s'étend ledit tube capillaire, et
d/ une échelle graduée en regard d'une partie au moins dudit tube capillaire ;
   et ce thermomètre est caractérisé par le fait que ledit réservoir de liquide est réalisé d'un seul tenant avec ladite première extrémité dudit tube capillaire, ledit réservoir de liquide comprenant une surface extérieure qui s'étend en regard de ladite surface intérieure de ladite seconde extrémité d'enveloppe tubulaire,
   et par le fait qu'il comprend des moyens de solidarisation entre ladite surface intérieure de ladite seconde extrémité d'enveloppe tubulaire, d'une part, et ladite surface extérieure dudit réservoir de liquide, ou ledit tube capillaire, d'autre part. Ces moyens de solidarisation consistent en une colle de type silicone.

D'autres caractéristiques non limitatives et avantageuses du thermomètre conforme à l'invention, prises individuellement ou selon toutes les combinaisons techniquement possibles, sont les suivantes :
- la paroi de fermeture de la seconde extrémité d'enveloppe comporte une surface intérieure en forme de calotte sphérique concave ;
- ledit réservoir de liquide comporte une extrémité libre dont la surface extérieure est en forme de calotte sphérique convexe ;
- ladite enveloppe tubulaire comprend un corps tubulaire de section circulaire ayant un diamètre D constant ou sensiblement constant, lequel corps tubulaire se prolonge par un embout tubulaire de section circulaire ayant un diamètre d constant ou sensiblement constant, inférieur à D, l'extrémité libre dudit embout tubulaire constituant ladite seconde extrémité d'enveloppe ;
- lesdits moyens de collage consistent en une colle enrobant au moins partiellement ledit réservoir de liquide et dont la couleur est identique ou tout au moins similaire à la couleur dudit liquide thermométrique ;
- l'enveloppe tubulaire et le tube capillaire sont réalisés en verre ;
- le tube capillaire comporte une face extérieure plane sur laquelle est solidarisée une étiquette munie de ladite échelle graduée.

L'invention propose également un procédé de fabrication d'un thermomètre à dilatation tel que défini à la revendication 8.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en coupe longitudinale d'un thermomètre à dilatation conforme à l'invention ;
- les figures 2 à 11 illustrent les principales étapes d'un procédé de fabrication possible du thermomètre à dilatation illustré sur la figure 1.

### Dispositif

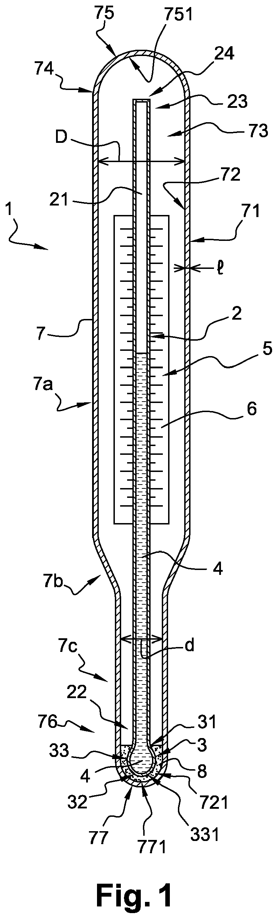

Le thermomètre 1 illustré schématiquement sur la figure 1 comprend un tube capillaire 2 muni d'un réservoir 3 contenant un liquide thermométrique 4, et associé à une échelle graduée 5 imprimée sur une étiquette 6, cet ensemble étant logé dans une enveloppe tubulaire 7 en matériau transparent.

Le tube capillaire 2 est rectiligne. Son âme intérieure 21, avantageusement de section circulaire, a un diamètre de l'ordre de 0,30 à 0,60mm.
Son contour externe peut être de section circulaire, prismatique ou autre, dont le diamètre (ou la plus grande dimension) peut être compris entre 2 et 3mm. ; ce contour externe comporte avantageusement un méplat (ou face plane) pour optimiser la solidarisation de l'étiquette 6 portant l'échelle graduée 5.
De préférence encore la section transversale du tube capillaire est de forme triangulaire.
De ce fait, l'étiquette 6 peut être efficacement solidarisée par collage sur l'une des trois faces de cette section triangulaire ; de plus, cette section triangulaire permet d'optimiser la lecture du niveau du liquide thermométrique.

La longueur du tube capillaire 2 est comprise entre quelques centimètres et quelques dizaines de centimètres.

Ce tube capillaire 2 est réalisé en matériau transparent, avantageusement en verre.

Il comprend une première extrémité 22 en communication fluidique avec le réservoir de liquide 3 et une seconde extrémité 23 fermée par une paroi d'obturation 24.

Le réservoir de liquide 3 est réalisé d'un seul tenant avec la première extrémité 22 du tube capillaire 2.

L'âme intérieure 21 du tube capillaire 2 est fermée d'un côté par la paroi d'obturation 24 et de l'autre côté par le réservoir 3.
La paroi d'obturation 24 est avantageusement réalisée d'un seul tenant avec la seconde extrémité 23 du tube capillaire 2.

Ce réservoir 3 est de forme générale sphérique ou tubulaire allongée ; l'une de ses extrémités 31 est raccordée de façon monobloc avec la première extrémité 22 du tube capillaire 2, et son autre extrémité 32 est libre.

Le réservoir 3 comprend une surface extérieure 33.
La partie 331 de cette surface extérieure 33 qui correspond à l'extrémité libre 32 du réservoir 3 est en forme de calotte sphérique convexe.

L'enveloppe tubulaire 7 est réalisée en matériau transparent, avantageusement en verre. Elle comporte une surface extérieure 71 et une surface intérieure 72 ; son épaisseur I, entre lesdites surfaces extérieure 71 et intérieure 72 est constante ou sensiblement constante, et peut être de l'ordre de 0,7 à 0,9mm.

Le volume intérieur 73 de cette enveloppe tubulaire 7, délimité par la surface intérieure 72, est adapté pour loger le tube capillaire 2 et l'étiquette 6 munie de l'échelle graduée 5.

Cette enveloppe tubulaire 7 comprend :
- une première extrémité d'enveloppe 74 munie d'une paroi d'obturation 75, et
- une seconde extrémité d'enveloppe 76 munie d'une paroi de fermeture 77.

La paroi d'obturation 75 est avantageusement réalisée d'un seul tenant avec la première extrémité 74 de l'enveloppe tubulaire 7; et elle comporte une surface intérieure 751 en forme de calotte sphérique concave.

De son côté, la paroi de fermeture 77 est avantageusement réalisée d'un seul tenant avec la seconde extrémité 76 de l'enveloppe tubulaire 7 ; et elle comporte une surface intérieure 771 en forme de calotte sphérique concave.

La seconde extrémité 76 de l'enveloppe tubulaire 7 comporte une surface intérieure 721 constituant une partie de la surface intérieure 72 de ladite enveloppe tubulaire 7. Cette surface intérieure 721 de la seconde extrémité 76 d'enveloppe tubulaire 7 comprend la surface intérieure 771 en forme de calotte sphérique concave de la paroi de fermeture 77.

Plus précisément, l'enveloppe tubulaire 7 comprend un corps tubulaire 7a de section circulaire ayant un diamètre D constant ou sensiblement constant, qui se prolonge au niveau d'un rétreint 7b par un embout tubulaire 7c de section circulaire, en forme de plongeant, ayant un diamètre d constant ou sensiblement constant, inférieur à D.

L'extrémité libre du corps tubulaire 7a constitue la première extrémité d'enveloppe 74 et, de l'autre côté, l'extrémité libre de l'embout tubulaire 7c constitue la seconde extrémité d'enveloppe 76.

Comme on peut le voir sur la figure 1, le tube capillaire 2 est logé dans le volume intérieur 73 de l'enveloppe tubulaire 7, avec sa première extrémité 22 munie du réservoir de liquide 3 située du côté de la seconde extrémité 76 de ladite enveloppe tubulaire 7, et avec sa seconde extrémité 23 située du côté de la première extrémité 74 de ladite enveloppe tubulaire 7.

Le réservoir de liquide 3 est positionné dans le fond de l'embout tubulaire 7c, avec son extrémité libre 32 contre, ou pratiquement contre, la paroi de fermeture 77.
La surface extérieure 331 de cette extrémité libre 32 de réservoir 3 s'étend en regard d'une partie de la surface intérieure 721 de la seconde extrémité 76 de l'enveloppe tubulaire 7, et plus précisément en regard de la surface intérieure 771 en forme de calotte sphérique concave de la paroi de fermeture 77.

A ce niveau, de préférence, le diamètre extérieur de l'extrémité libre 32 du réservoir de liquide 3, en forme de calotte sphérique convexe, est identique, au jeu près, ou pratiquement identique, au diamètre intérieur de cette surface intérieure 771 en forme de calotte sphérique concave de la paroi de fermeture 77.

De plus, le thermomètre 1 comprend des moyens de solidarisation entre la surface intérieure 721 de la seconde extrémité 76 de l'enveloppe tubulaire 7 et la surface extérieure 33 du réservoir de liquide 3, ici en forme de moyens de collage 8.

Ces moyens de collage 8 consistent en une colle interposée entre les deux surfaces 33 et 721 à solidariser ; ces moyens de collage 8 enrobent au moins une partie du réservoir de liquide 3, et de préférence la totalité de celui-ci.

La colle 8 est avantageusement une colle de type silicone.

Cette colle 8 de type silicone est adaptée pour être facilement mise en oeuvre sur une plage de températures allant de -10°C à +120°C, correspondant à une plage de températures courante des thermomètres, et aussi pour assurer une solidarisation efficace entre les deux matériaux en verre de l'enveloppe tubulaire 7 et du réservoir de liquide 3 du tube capillaire 2, sur cette plage de températures.
De préférence la couleur de la colle 8 utilisée est identique ou tout au moins similaire à la couleur du liquide thermométrique 4. On utilise par exemple une colle de couleur rouge, identique ou proche de la couleur rouge du liquide thermométrique 4 ; mais toute autre couleur peut aussi être envisagée.

De manière classique, ce liquide thermométrique 4 est présent dans réservoir de liquide 3 et dans une partie du tube capillaire 2. Son niveau supérieur dans le tube capillaire 2 indique la température ambiante en relation avec l'échelle graduée 5.

Le liquide thermométrique 4 est de nature classique. On peut par exemple utiliser un produit élaboré dérivé du pétrole.

### Procédé

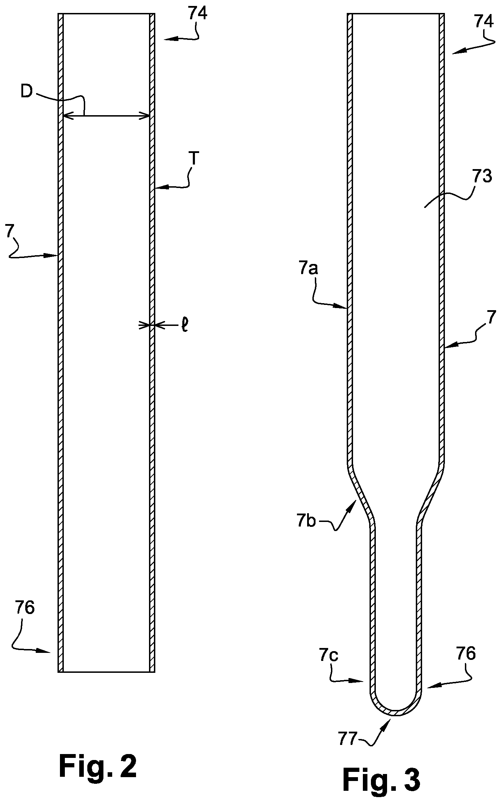

Un procédé possible pour la fabrication du thermomètre de la figure 1 est illustré sur les figures 2 à 11.

Sur ces figures 2 à 11, par mesure de simplification on utilise les repères de la figure 1 pour désigner les éléments structurels du thermomètre en cours de façonnage.

D'une manière générale, dans le cadre de ce procédé, on façonne une ébauche d'enveloppe tubulaire 7 ouverte au niveau de sa première extrémité 74 et fermée au niveau de sa seconde extrémité 76 ; on prépare un ensemble E formé du tube capillaire 2, du réservoir de liquide 3 et de l'étiquette 6 avec l'échelle graduée 5 ; on insère un petit volume de colle 8 au niveau de l'extrémité fermée 76 de l'ébauche d'enveloppe ; on introduit l'ensemble E dans l'ébauche d'enveloppe, avec le réservoir de liquide 3 positionné au niveau de l'extrémité fermée de l'ébauche d'enveloppe ; et enfin on ferme la première extrémité d'enveloppe 74.

Plus précisément, l'ébauche d'enveloppe tubulaire 7 est préparée à partir d'un tube T en matériau transparent, de préférence en verre, tel que représenté sur la figure 2. Ce tube T a une section circulaire de diamètre interne D, et d'épaisseur de paroi I; il est ouvert à sa première extrémité 74 ainsi qu'à sa seconde extrémité 76.

La seconde extrémité 76 de ce tube de verre T est chauffée, étirée et conformée pour réaliser la paroi de fermeture 77 et obtenir l'embout tubulaire 7c de diamètre réduit, tel qu'illustré sur la figure 3.
Cette opération est réalisée manuellement ou automatiquement, par chauffage à la flamme.

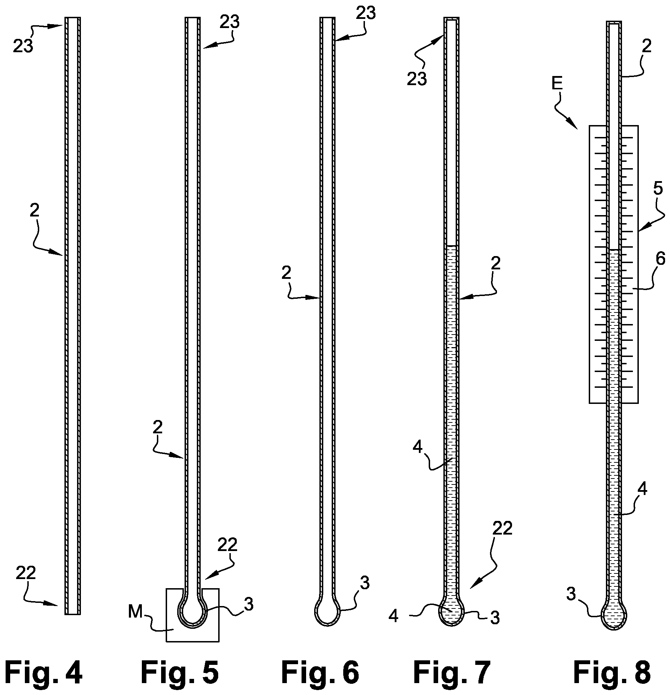

A côté de cela, on prépare un tube capillaire muni d'un réservoir de liquide 3 à une première extrémité, cette préparation comprenant la succession d'opérations suivantes :
- on fournit un tube capillaire 2 en verre dont le volume intérieur débouche extérieurement au niveau de ses deux extrémités 22 et 23, tel qu'illustré sur la figure 4.
- on chauffe la première extrémité 22 du tube capillaire 2 pour obtenir le ramollissement de la matière à ce niveau,
- on ferme la première extrémité 22 dudit tube capillaire 2 et on conforme le réservoir de liquide 3 au niveau de cette première extrémité fermée ;
   cette conformation du réservoir de liquide 3 est réalisée par soufflage d'air dans le tube capillaire 2, par sa seconde extrémité ouverte 23, après mise en place de la première extrémité 22 dans un moule de formage M adapté, tel qu'illustré sur la figure 5 ;
   on obtient le capillaire 2 associé au réservoir monobloc 3 illustré sur la figure 6, dont la seconde extrémité 23 est ouverte ;
- on remplit le réservoir 3 et une partie du capillaire 2 avec le liquide thermométrique 4 (figure 7), par toute technique classique adaptée, par exemple au moyen d'une pompe à vide; et
- on ferme la seconde extrémité 23 du capillaire 2 pour constituer la paroi de fermeture 24 (figure 7); cette fermeture peut être réalisée par chauffage et conformation de la paroi de fermeture 24 par la matière du capillaire ; on peut aussi utiliser un bouchon d'obturation rapporté ;
- enfin, on fixe l'étiquette 6 munie de l'échelle graduée 5 sur le capillaire 2, après étalonnage. Cette fixation est de préférence réalisée sur une face plane prévue sur la longueur du capillaire 2 (avantageusement de section triangulaire).
On obtient l'ensemble E composé du capillaire 2 du réservoir 3 et de l'étiquette 6, illustré sur la figure 8.

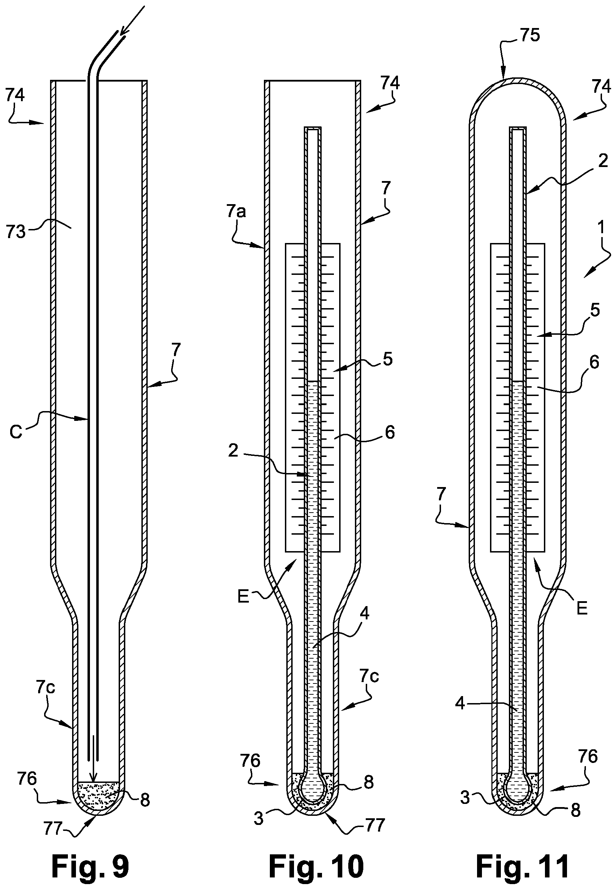

L'opération suivante consiste à introduire les moyens de collage 8, en forme de colle liquide ou semi liquide, avantageusement une colle de type silicone, dans le volume interne 73 de l'enveloppe tubulaire 7, au niveau de sa seconde extrémité 76 (dans le fond de la partie d'embout 7c), sur la surface intérieure 721 de la seconde extrémité d'enveloppe 76, et plus précisément, au moins sur la surface intérieure 771 de la paroi de fermeture 77.
Comme illustré sur la figure 9, cette opération peut être réalisée au moyen d'une canule C introduite par l'extrémité ouverte 74 de l'ébauche d'enveloppe 7, par exemple reliée à des moyens d'aspiration/refoulement.

On introduit ensuite l'ensemble E formé du tube capillaire 2, du réservoir 3 et de l'étiquette 6, dans le volume intérieur 73 de l'ébauche d'enveloppe 7, par son extrémité ouverte 74, de sorte que le réservoir de liquide 3 vienne se positionner dans le fond de la partie d'embout 7c et entre en contact avec le volume de colle 8, pour solidariser par collage ledit réservoir de liquide 3 avec la surface intérieure 721 de la seconde extrémité d'enveloppe 76 (figure 10).

Comme illustré sur la figure 11, il reste à fermer la première extrémité 74 de l'enveloppe tubulaire 7, par chauffage et conformation de la paroi d'obturation 75 par la matière du tube T d'origine (ou en variante par l'utilisation d'un bouchon d'obturation rapporté).

Le temps de fabrication d'un tel thermomètre est réduit, ce qui permet de limiter les coûts de revient. Le thermomètre obtenu est également très résistant.

## Revendications

1. Thermomètre à dilatation de liquide comprenant :
a/ un réservoir (3) de liquide thermométrique (4),
b/ un tube capillaire (2) en communication fluidique avec ledit réservoir de liquide (3), comprenant une première extrémité (22) et une seconde extrémité (23),
c/ une enveloppe tubulaire (7) en matériau transparent comprenant :
- une surface extérieure (71),
- une surface intérieure (72) délimitant un volume intérieur (73),
- une première extrémité d'enveloppe (74),
- une seconde extrémité d'enveloppe (76) qui comporte une paroi de fermeture (77) obturant ledit volume intérieur (73), et qui comporte une surface intérieure (721) formée d'une partie de ladite surface intérieure (72) de ladite enveloppe tubulaire (7),
au niveau de laquelle seconde extrémité d'enveloppe (76) est ménagé ledit réservoir de liquide (3),
et dans le volume intérieur (73) de laquelle enveloppe tubulaire (7) s'étend ledit tube capillaire (2), et
d/ une échelle graduée (5) en regard d'une partie au moins dudit tube capillaire (2),
ledit réservoir de liquide (3) étant réalisé d'un seul tenant avec ladite première extrémité (22) dudit tube capillaire (2),
ledit réservoir de liquide (3) comprenant une surface extérieure (33) qui s'étend en regard de ladite surface intérieure (721) de ladite seconde extrémité (76) de l'enveloppe tubulaire (7),
ledit thermomètre comprenant des moyens de solidarisation (8) entre ladite surface intérieure (721) de ladite seconde extrémité (76) d'enveloppe tubulaire (7), d'une part, et ladite surface extérieure (33) dudit réservoir de liquide (3), d'autre part,
**caractérisé en ce que** lesdits moyens de solidarisation (8) consistent en une colle (8) de type silicone.

2. Thermomètre à dilatation de liquide selon la revendication 1, **caractérisé en ce que** la paroi de fermeture (77) de la seconde extrémité d'enveloppe (76) comporte une surface intérieure (771) en forme de calotte sphérique concave.

3. Thermomètre à dilatation de liquide selon la revendication 2, **caractérisé en ce que** ledit réservoir de liquide (3) comporte une extrémité libre (32) dont la surface extérieure (331) est en forme de calotte sphérique convexe.

4. Thermomètre à dilatation de liquide selon l'une quelconque des revendications 1 ou 2, **caractérisé en ce que** ladite enveloppe tubulaire (7) comprend un corps tubulaire (7a) de section circulaire ayant un diamètre D constant ou sensiblement constant, lequel corps tubulaire (7a) se prolonge par un embout tubulaire (7c) de section circulaire ayant un diamètre d constant ou sensiblement constant, inférieur à D, l'extrémité libre dudit embout tubulaire (7c) constituant ladite seconde extrémité d'enveloppe (76).

5. Thermomètre à dilatation de liquide selon l'une quelconque des revendications 1 à 4, **caractérisé en ce que** lesdits moyens de collage (8) consistent en une colle (8) enrobant au moins partiellement ledit réservoir de liquide (3) et dont la couleur est identique ou tout au moins similaire à la couleur dudit liquide thermométrique (4).

6. Thermomètre à dilatation de liquide selon l'une quelconque des revendications 1 à 5, **caractérisé en ce que** l'enveloppe tubulaire (7) et le tube capillaire (2) sont réalisés en verre.

7. Thermomètre à dilatation de liquide selon l'une quelconque des revendications 1 à 6, **caractérisé en ce que** le tube capillaire (2) comporte une face extérieure plane sur laquelle est solidarisée une étiquette (6) munie de ladite échelle graduée (5).

8. Procédé de fabrication d'un thermomètre à dilatation (1) selon l'une quelconque des revendications 1 à 7, **caractérisé en ce qu'**il comprend les opérations consistant à :
- préparer une enveloppe tubulaire (7) dont le volume intérieur (73) débouche extérieurement au niveau d'une première de ses extrémité (74) et est fermé par une paroi de fermeture (77) au niveau d'une seconde extrémité (76),
- préparer un tube capillaire (2) muni d'un réservoir de liquide (3) à une première extrémité (22) et contenant ledit liquide thermométrique (4),
laquelle préparation du tube capillaire (2) comprend la succession d'opérations suivantes :
- fourniture d'un tube capillaire (2) en verre dont le volume intérieur débouche extérieurement au niveau de ses deux extrémités (22, 23),
- chauffer une première extrémité (22) dudit tube capillaire (2) pour obtenir le ramollissement de la matière à ce niveau,
- fermer ladite première extrémité (22) dudit tube capillaire (2) et conformer ledit réservoir de liquide (3) au niveau de ladite première extrémité fermée (22),
- introduire une colle (8) liquide ou semi liquide de type silicone dans le volume interne (73) de l'enveloppe tubulaire (7), au niveau de sa seconde extrémité (76), au moins sur la surface intérieure (771) de sa paroi de fermeture (77),
- introduire ledit tube capillaire (2) dans ladite enveloppe tubulaire (7) pour positionner ledit réservoir de liquide (3) au niveau de la seconde extrémité (76) de ladite enveloppe tubulaire (7) fermée par ladite paroi de fermeture (77), et mettre en contact du réservoir de liquide (3) avec ladite colle (8) pour solidariser par collage ledit réservoir de liquide (3) avec la surface intérieure (721) de ladite seconde extrémité d'enveloppe (76), et
- fermer ladite première extrémité (74) de ladite enveloppe tubulaire (7).

9. Procédé de fabrication d'un thermomètre à dilatation (1) selon la revendication 8, **caractérisé en ce que** l'opération de conformation dudit réservoir de liquide (3) est obtenue par soufflage d'air dans ledit tube capillaire (2), par ladite seconde extrémité (23) ouverte, après mise en place de ladite première extrémité (22) dans un moule de formage (M).

10. Procédé de fabrication d'un thermomètre à dilatation (1) selon l'une quelconque des revendications 8 ou 9, **caractérisé en ce qu'**il comprend une opération de solidarisation d'une étiquette (6) munie de ladite échelle graduée (5) avec ledit capillaire (2), avant introduction de ce dernier dans ladite enveloppe tubulaire (7).

11. Procédé de fabrication d'un thermomètre à dilatation (1) selon la revendication 8, **caractérisé en ce que** l'opération d'introduction de la colle (8) liquide ou semi liquide de type silicone dans le volume interne (73) de l'enveloppe tubulaire (7) consiste à introduire ladite colle de type silicone dans ledit volume interne (73) de l'enveloppe tubulaire (7), au niveau de sa seconde extrémité (76), dans le fond de la partie d'embout (7c), au moyen d'une canule (C) introduite par ladite première extrémité (74) de l'enveloppe tubulaire (7), laquelle canule (C) est reliée à des moyens d'aspiration/refoulement.

## Patentansprüche

1. Dehnungsflüssigkeitsthermometer mit
a) einem Behälter (3) für Thermometerflüssigkeit (4),
b) einer Kapillarröhre (2) in fluidischer Verbindung mit dem Flüssigkeitsbehälter (3), die ein erstes Ende (22) und ein zweites Ende (23) aufweist,
c) einer rohrförmigen Hülle (7) aus durchsichtigem Material mit
- einer äußeren Oberfläche (71),
- einer inneren Oberfläche (72), die ein inneres Volumen (73) begrenzt,
- einem ersten Hüllenende (74),
- einem zweiten Hüllenende (76), das eine das innere Volumen (73) abschließende Verschlußwandung (77) aufweist und das eine innere Oberfläche (721) aufweist, die von einem Teil der inneren Oberfläche (72) der rohrförmigen Hülle (7) gebildet ist,
wobei im Bereich des zweiten Hüllenendes (76) der Flüssigkeitsbehälter (3) angeordnet ist und
sich im inneren Volumen (73) der rohrförmigen Hülle (7) die Kapillarröhre (2) erstreckt, und
d) einer gegenüber wenigstens einem Teil der Kapillarröhre angeordneten Skala (5),
wobei der Flüssigkeitsbehälter (3) mit dem ersten Ende (22) der Kapillarröhre (2) in einem Stück gefertigt ist,
wobei der Flüssigkeitsbehälter (3) eine äußere Oberfläche (33) aufweist, die sich gegenüber der inneren Oberfläche (721) des zweiten Endes (76) der rohrförmigen Hülle (7) erstreckt,
wobei das Thermometer Befestigungsmittel (8) zwischen der inneren Oberfläche (721) des zweiten Endes (76) der rohrförmigen Hülle (7) einerseits und der äußeren Oberfläche (33) des Flüssigkeitsbehälters (3) andererseits aufweist,
**dadurch gekennzeichnet, daß** die Befestigungsmittel (8) aus einem Kleber (8) vom Silikontyp bestehen.

2. Dehnungsflüssigkeitsthermometer gemäß Anspruch 1, **dadurch gekennzeichnet, daß** die Verschlußwandung (77) des zweiten Hüllenendes (76) eine innere Oberfläche (771) in Form einer konkaven Kugelkalotte aufweist.

3. Dehnungsflüssigkeitsthermometer gemäß Anspruch 2, **dadurch gekennzeichnet, daß** der Flüssigkeitsbehälter (3) ein freies Ende (32) aufweist, dessen äußere Oberfläche (331) die Form einer konvexen Kugelkalotte hat.

4. Dehnungsflüssigkeitsthermometer gemäß einem der Ansprüche 1 oder 2, **dadurch gekennzeichnet, daß** die rohrförmige Hülle (7) einen rohrförmigen Körper (7a) mit kreisförmigem Querschnitt mit einem konstanten oder im Wesentlichen konstanten Durchmesser D aufweist, wobei der rohrförmige Körper (7a) durch ein rohrförmiges Endstück (7c) mit kreisförmigem Querschnitt mit einem konstanten oder im Wesentlichen konstanten Querschnitt d, der kleiner als D ist, verlängert ist, das das zweite Hüllenende (76) bildet.

5. Dehnungsflüssigkeitsthermometer gemäß einem der Ansprüche 1 bis 4, **dadurch gekennzeichnet, daß** die Klebemittel (8) aus einem Kleber (8) bestehen, der wenigstens teilweise den Flüssigkeitsbehälter (3) umgibt und dessen Farbe mit der Farbe der Thermometerflüssigkeit (4) identisch oder dieser wenigstens ähnlich ist.

6. Dehnungsflüssigkeitsthermometer gemäß einem der Ansprüche 1 bis 5, **dadurch gekennzeichnet, daß** die rohrförmige Hülle (7) und das Kapillarrohr (2) aus Glas gefertigt sind.

7. Dehnungsflüssigkeitsthermometer gemäß einem der Ansprüche 1 bis 6, **dadurch gekennzeichnet, daß** das Kapillarrohr (2) eine ebene Außenseite aufweist, auf der ein mit der Skala (5) versehenes Etikett (6) befestigt ist.

8. Verfahren zur Herstellung eines Dehnungsflüssigkeitsthermometers gemäß einem der Ansprüche 1 bis 7, **dadurch gekennzeichnet, daß** es die Schritte aufweist, die darin bestehen,
- eine rohrförmige Hülle (7) vorzubereiten, deren inneres Volumen (73) im Bereich eines ersten (74) ihrer Enden nach außen mündet und im Bereich eines zweiten Endes (76) durch eine Verschlußwandung (77) verschlossen ist,
- ein Kapillarrohr (2) vorzubereiten, das an einem ersten Ende (22) mit einem Flüssigkeitsbehälter (3) versehen ist und die Thermometerflüssigkeit (4) enthält, wobei die Vorbereitung des Kapillarrohrs (2) die folgende Schrittfolge aufweist:
- Liefern eines Kapillarrohrs (2) aus Glas, dessen inneres Volumen im Bereich seiner beiden Enden (22, 23) nach außen mündet,
- Erhitzen eines ersten Endes (22) des Kapillarrohrs (2), um das Erweichen des Materials in diesem Bereich zu erhalten,
- Schließen des ersten Endes (22) des Kapillarrohrs (2) und Bilden des Flüssigkeitsbehälters (3) im Bereich des geschlossenen ersten Endes (22),
- einen flüssigen oder halbflüssigen Kleber (8) vom Silikontyp in das innere Volumen (73) der rohrförmigen Hülle (7) im Bereich von dessen zweitem Ende (76) wenigstens auf der inneren Oberfläche (771) von deren Verschlußwandung (77) einzubringen,
- das Kapillarrohr (2) in die rohrförmige Hülle (7) einzubringen, um den Flüssigkeitsbehälter (3) im Bereich des durch die Verschlußwandung (77) verschlossenen zweiten Endes (76) der rohrförmigen Hülle (7) zu positionieren, und den Flüssigkeitsbehälter (3) mit dem Kleber (8) in Kontakt zu bringen, um den Flüssigkeitsbehälter (3) mit der inneren Oberfläche (721) des zweiten Hüllenendes (76) durch Klebung fest miteinander zu verbinden, und
- das erste Ende (74) der rohrförmigen Hülle (7) zu verschließen.

9. Verfahren zur Herstellung eines Dehnungsflüssigkeitsthermometers (1) gemäß Anspruch 8, **dadurch gekennzeichnet, daß** der Schritt des Bildens des Flüssigkeitsbehälters (3) durch Einblasen von Luft durch das offene zweite Ende (23) in das Kapillarrohr (2) erfolgt, nachdem das erste Ende (22) in eine Formgebungsform (M) eingesetzt worden ist.

10. Verfahren zur Herstellung eines Dehnungsflüssigkeitsthermometers (1) gemäß einem der Ansprüche 8 oder 9, **dadurch gekennzeichnet, daß** es einen Schritt des Befestigens eines mit der Skala (5) versehenen Etiketts (6) am Kapillarrohr (2) vor Einführen des letzteren in die rohrförmige Hülle (7) aufweist.

11. Verfahren zur Herstellung eines Dehnungsflüssigkeitsthermometers (1) gemäß Anspruch 8, **dadurch gekennzeichnet, daß** der Schritt des Einbringens des flüssigen oder halbflüssigen Klebers (8) vom Silikontyp in das innere Volumen (73) der rohrförmigen Hülle (7) darin besteht, den Kleber vom Silikontyp in das innere Volumen (73) der rohrförmigen Hülle (7) im Bereich von deren zweitem Ende (76) am Boden des Endstücks (7c) mittels einer durch das erste Ende (74) der rohrförmigen Hülle (7) eingeführten Kanüle (C) einzubringen, wobei die Kanüle (C) mit Ansaug-/Verdrängungsmitteln verbunden ist.

## Claims

1. Expanding liquid thermometer comprising:
a / a reservoir (3) of thermometric liquid (4),
b / a capillary tube (2) in fluid communication with said reservoir of liquid (3), comprising a first end (22) and a second end (23),
c / a tubular casing (7) of transparent material comprising:
- an outer surface (71),
- an inner surface (72) delimiting an inner volume (73),
- a first casing end (74),
- a second envelope end (76) which comprises a closing wall (77) closing off said internal volume (73), and which comprises an internal surface (721) formed from a portion of said internal surface (72) of said tubular casing (7),
at the level of which second casing end (76) is formed said liquid reservoir (3), and in the internal volume (73) of which tubular casing (7) extends said capillary tube (2), and
d / a graduated scale (5) facing at least part of said capillary tube (2), said liquid reservoir (3) being formed integrally with said first end (22) of said capillary tube (2),
said liquid reservoir (3) comprising an outer surface (33) which extends opposite said internal surface (721) of said second end (76) of the tubular casing (7),
said thermometer comprising securing means (8) between said internal surface (721) of said second end (76) of the tubular casing (7), on the one hand, and said outer surface (33) of said liquid reservoir (3), on the other hand,
**characterized in that** said securing means (8) consist of a silicone type adhesive (8).

2. Expanding liquid thermometer according to claim 1, **characterized in that** the closing wall (77) of the second envelope end (76) has an inner surface (771) in the form of a concave spherical cap.

3. Expanding liquid thermometer according to claim 2, **characterized in that** said liquid reservoir (3) has a free end (32) whose outer surface (331) is in the form of a convex spherical cap.

4. Expanding liquid thermometer according to any one of claims 1 or 2, **characterized in that** said tubular casing (7) comprises a tubular body (7a) of circular section having a constant or substantially constant diameter D, which tubular body (7a) is extended by a tubular end piece (7c) of circular section having a constant or substantially constant diameter d, less than D, the free end of said tubular end piece (7c) constituting said second envelope end (76).

5. Expanding liquid thermometer according to any one of claims 1 to 4, **characterized in that** said bonding means (8) consist of an adhesive (8) at least partially coating said liquid reservoir (3) and whose color is identical or at least similar to the color of said thermometric liquid (4).

6. Expanding liquid thermometer according to any one of claims 1 to 5, **characterized in that** the tubular casing (7) and the capillary tube (2) are made of glass.

7. Expanding liquid thermometer according to any one of claims 1 to 6, **characterized in that** the capillary tube (2) has a plane outer face on which is fixed a label (6) provided with said graduated scale (5).

8. Method of manufacturing an expanding thermometer (1) according to any one of claims 1 to 7, **characterized in that** it comprises the operations of:
- preparing a tubular casing (7) of which the internal volume (73) opens outwardly at a first of its ends (74) and is closed by a closing wall (77) at a second end (76),
- preparing a capillary tube (2) provided with a liquid reservoir (3) at a first end (22) and containing said thermometric liquid (4),
said preparation of the capillary tube (2) comprising the succession of following operations:
- supply of a glass capillary tube (2), the internal volume of which opens outwardly at the level of its two ends (22, 23),
- heating a first end (22) of said capillary tube (2) to obtain the softening of the material at this level,
- closing said first end (22) of said capillary tube (2) and shaping said liquid reservoir (3) at said first closed end (22),
- introducing a liquid or semi-liquid adhesive (8) of silicone type in the internal volume (73) of the tubular casing (7), at its second end (76), at least on the internal surface (771) of its closing wall (77),
- inserting said capillary tube (2) into said tubular casing (7) to position said liquid reservoir (3) at the level of the second end (76) of said tubular casing (7) closed by said closing wall (77), and bringing the liquid reservoir (3) into contact with said adhesive (8) in order to secure said liquid reservoir (3) by gluing with the internal surface (721) of said second envelope end (76), and
- closing said first end (74) of said tubular casing (7).

9. Method of manufacturing an expanding thermometer (1) according to claim 8, **characterized in that** the shaping operation of said liquid reservoir (3) is obtained by blowing air into said capillary tube (2), by said open second end (23), after placing said first end (22) in a forming mold (M).

10. A method of manufacturing an expanding thermometer (1) according to any one of claim 8 or 9, **characterized in that** it comprises an operation of securing a label (6) provided with said graduated scale (5) with said capillary (2), before introduction of the latter into said tubular casing (7).

11. Method of manufacturing an expanding thermometer (1) according to claim 8, **characterized in that** the operation of introducing the liquid or semi-liquid adhesive (8) of silicone type in the internal volume (73) of the tubular casing (7) consists in introducing said adhesive of silicone type in the internal volume (73) of the tubular casing (7), at its second end (76), in the bottom of the end piece (7c), by means of a cannula (C) introduced through said first end (74) of the tubular casing (7), said cannula (C) being connected to suction / delivery means.
